# EUROPÄISCHE PATENTSCHRIFT

(11) **EP 0 404 284 B1**
(45) Veröffentlichungstag und Bekanntmachung des Hinweises auf die Patenterteilung: **15.09.1993**
(21) Anmeldenummer: 90250152.7
(22) Anmeldetag: 12.06.1990
(51) Int. Cl.: H02B 1/34

(54) **Gerüst für einen Schaltschrank aus mehrfach abgewinkelten Profilelementen**
Framework for a switchbox consisting of a multiple of profiled elements, the said elements having a plurality of bends
Charpente pour une cabine de distribution à éléments profilés coudés plusieurs fois

(30) Priorität: 19.06.1989 DE 3920353
(43) Veröffentlichungstag der Anmeldung: 27.12.1990
(73) Patentinhaber: SIEMENS AKTIENGESELLSCHAFT, 80333 München (DE)
(72) Erfinder: Blum, Richard, D-6057 Dietzenbach (DE); Groh, Hans-Michael, D-6452 Hainburg 2 (DE); Küster, Willi, D-6460 Gelnhausen 2 (DE); Schmidt, Ludwig, D-6000 Frankfurt 90 (DE)

(56) Entgegenhaltungen:
- EP-A- 0 262 599

## Beschreibung

Die Erfindung betrifft ein Gerüst für einen Schaltschrank aus mehrfach abgewinkelten Profilelementen mit einseitig offenem Hohlprofil und Lochreihen zur Anbringung von Abdeckungen, Türen und Einbauten. Ein Gerüst dieser Art ist durch die DE-C 26 27 260 bekannt geworden. Das Gerüst ist aus einzelnen Abschnitten von Profilelementen einheitlicher Art zusammengesetzt, wobei würfelartige Eckstücke eine feste Schraubverbindung gestatten.

Oberhalb gewisser Abmessungen und insbesondere jenseits eines gewissen Verhältnisses von Höhe zu Breite und von Höhe zu Tiefe ist die Belastbarkeit der bekannten Gerüste durch Einbauten und andere Krafteinflüsse beschränkt, da es sonst zu Verformungen und zu einer Neigung zu Schwingungen kommen kann. Um solchen Erscheinungen vorzubeugen, muß der Querschnitt der Profilelemente mehr oder weniger erheblich gesteigert werden. Hierdurch kann die Grenze zu einer unwirtschaftlichen und schweren Konstruktion erreicht werden. Andererseits kann auch die universelle Verwendbarkeit eines Gerüstes zum Bau von Schaltschränken für die verschiedensten Einsatzgebiete, die von der Unterbringung von Elektronikbaugruppen bis zu energietechnischen Geräten reichen kann, durch große Profilquerschnitte, große Materialstärke und eventuell benötigte Versteifungen beeinträchtigt sein.

Der Erfindung liegt hiervon ausgehend die Aufgabe zugrunde, ein Gerüst für einen im vorstehend erläuterten Sinn universell einsetzbaren Schaltschrank zu schaffen, das bei geringem Gewicht und Materialaufwand die geforderte Stabilität aufweist und sich für verschiedenste Einbauten sowie für die Verbindung mit weiteren gleichen Schaltschränken bei guter Zugänglichkeit der Befestigungs- und Verbindungsstellen eignet.

Gemäß der Erfindung wird diese Aufgabe durch folgende Merkmale gelöst:
a) das Gerüst ist aus einem ersten Typ eines Profilelementes zur Bildung von Seitenrahmen und einem zweiten Typ eines Profilelementes zur Bildung von die Seitenrahmen verbindenden Querholmen gebildet;
b) die Profilelemente des ersten Typs weisen bei rechteckiger Grundform und seitlicher Lage der längeren Seite der Profilform außen wenigstens zwei ebene Profilabschnitte auf, die voneinander durch eine Einziehung getrennt sind und von denen der zweite, von der Außenkante entferntere Profilabschnitt gegenüber dem ersten, an die Außenkante anschliessenden Profilabschnitt zurückstehend angeordnet ist;
c) die Öffnung der Profilform der Profilelemente des ersten Typs befindet sich an der inneren längeren Seite der Profilform und ist von zwei in derselben Ebene liegenden Schenkein begrenzt;
d) die Profilelemente des zweiten Typs weisen bei einer etwa quadratischen und einseitig abgeschrägten Grundform des Profils zwei rechtwinklig zueinander stehende gleichlange Profilabschnitt mit einer der längeren Seite der rechteckigen Profilform der Profilelemente des ersten Typs entsprechenden Abmessung sowie zwei hieran anschließende, gleichfalls rechtwinklig abgewinkelte kürzere Profilabschnitte und weitere, unter etwa 45° abgewinkelte, die Öffnung der Profilform begrenzende Schenkel auf.

Bevor auf die Eigenschaften der neuen Gerüstanordnung eingegangen wird, sei bemerkt, daß die vorstehend benutzten Bezeichnungen für die Lage von Abschnitten oder Teilen wie seitlich, innen, außen auf das fertige Gerüst bezogen sind.

Die Verwendung von zwei Typen von Profilelementen bringt bedeutende Vorteile für die Stabilität des Gerüstes mit sich.

Diese beruhen darauf, daß die Umfangslinie an den Verbindungsstellen zwischen den Seitenrahmen und den Querholmen länger als bei der Verwendung gleicher Profilelemente ist. Die hierdurch vergrößerte Stützweite ist gleichermaßen wirksam bei der Wahl unterschiedlicher Arten von Verbindungen. Gleichzeitig werden auf diese Weise Profilformen gebildet, die für die vorgesehenen Zwecke günstiger als einheitliche Profil formen geeignet sind. Diesen Vorteilen steht das Erfordernis gesonderter Werkzeuge zur Herstellung beider Typen von Profilelementen gegenüber. Bei den großen Stückzahlen jedoch, die Universal-Schaltschränke erreichen, kann dieser Gesichtspunkt vernachlässigt werden.

Die Kombination seitlicher Rahmenteile mit Querholmen ist an sich bekannt (DE-C-22 14 538). Die Profilformen entsprechen dabei jedoch nicht der vorstehend erläuterten Gestaltung.

Auf die Stabilität des Gerüstes wirkt es sich zusätzlich günstig aus, wenn die rechtwinklig abgewinkelten kürzeren Profilabschnitte der Profilelemente des zweiten Typs ebenso breit wie der außenliegende Schenkel der Profilelemente des ersten Typs bemessen sind, aus denen die Seitenrahmen bestehen.

Die Profilelemente des ersten Typs können an ihrer äußeren längeren Seite anschließend an den zurückgesetzt angeordneten Profilabschnitt einen weiteren, durch eine Abkröpfung nochmals zurückgesetzten Profilabschnitt aufweisen, der sich in einer parallel zu den Ebenen der an derselben Seite der Profilform befindlichen Profilabschnitte verlaufenden Ebene erstreckt. Somit stehen insgesamt drei Profilabschnitte zur Verfügung, von denen der am weitesten außen liegende die Aufgabe einer Anschlagfläche für die benachbarte Montage von Schaltschränken wahrnehmen kann. Die weiteren Profilabschnitte können zur Auflage von Abdeckungen und im Bedarfsfall unabhängig von den Abdeckungen zu verwendender Versteifungen benutzt werden. Eine ähnliche Anordnung ist an sich durch die DE-B-11 91 454 bekannt geworden, jedoch in Verbindung mit einem Winkelprofil, dem die übrigen Merkmale des vorliegenden ersten Typs eines Profilelemente fehlen.

Wie bereits erwähnt, gestattet es die beschriebene Verwendung unterschiedlicher Profilelemente zur Bildung von Seitenrahmen und Querholmen relativ leichte, d. h. dünnwandige Profile zu verwenden. Dies erleichtert die Einbringung von Löchern für die benötigten Zwecke. Vorteilhaft ist es in diesem Zusammenhang, wenn die Löcher der Lochreihen vollständig oder teilweise in zum Innenraum des Profils gerichteten Durchzügen angeordnet sind. Derart angeordnete Löcher eigenen sich besonders zur Verwendung gewindefurchender Schrauben. Auch können abwechselnd mit Durchzügen versehene, zum Eindrehen gewindefurchender Schrauben dienende Löcher und Rechtecklöcher ohne Durchzug angeordnet sein. Lochreihen dieser Ausführung eignen sich zur Anbringung von Geräteträgern oder von anderen Einbauteilen in der Weise, daß ein solches Einbauteil zunächst mit geeigneten Vorsprüngen zum Eingriff mit den rechteckigen Löchern gebracht und auf diese Weise vorläufig positioniert werden können. Anschließend wird die endgültige Befestigung ohne Beeinträchtigung durch die Gewichtskraft des Einbauteiles vorgenommen. Lochreihen ähnlicher Art sind bei Schaltschränken an sich bekannt (DE-A- 16 65 984).

Als weitere vorteilhafte Gestaltung kann der am Umfang der Seitenrahmen liegende Profilabschnitt der Profilelemente des ersten Typs zwei um die halbe Teilung verschobene und seitlich gegeneinander versetzte Lochreihen aufweisen. Auf diese Weise können beispielsweise kleinere Löcher zum Eindrehen gewindefurchender Schrauben zur Befestigung von Scharnierteilen oder dergleichen und größere Löcher für Verbindungsbolzen bereitgestellt werden. Die eine Lochreihe wird daher beispielsweise an der Frontseite des Gerüstes zur Montage von Türen und an der Rückseite für Abdeckungen benutzt, während die zweite Lochreihe an der Rückseite des Gerüstes zum Einsatz gelangt, um zwei Schaltschränke Rücken an Rücken zu verbinden.

Als besonderes Merkmal können die Profilelemente des zweiten Typs in den die Öffnung der Profilform begrenzenden Schenkeln Lochreihen mit einem gegenüber den weiteren Lochreihen doppelten Teilungsmaß aufweisen, woher im Zwischenraum zwischen den Löchern Ausnehmungen angebracht sind. Die Ausnehmungen erleichtern den Zugang zu den Lochreihen in den angrenzenden Profilabschnitten.

Die Erfindung wird im folgenden anhand des in den Figuren dargestellten Ausführungsbeispieles näher erläutert.

Die Figur 1 zeigt schematisch in perspektivischer Darstellung ein Gerüst für einen Schaltschrank.

In der Figur 2 ist gleichfalls perspektivisch ein Abschnitt eines Profilelementes an der in der Figur 1 mit II bezeichneten Stelle dargestellt, ergänzt durch anschließende, in der Figur 1 nicht gezeigte Bauteile.

Die Figur 3 zeigt einen perspektivisch dargestellten Abschnitt eines horizontalen Profilelementes an der in der Figur 1 mit III gekennzeichneten Stelle.

Die Figur 4 ist ein Schnitt durch die Profilelemente der Seitenrahmen von drei aneinanderstoßenden Schaltschränken.

In der Figur 5 ist einschnitt V-V durch das Gerüst in Fig. 1 in Verbindung mit einer Bodenplatte.

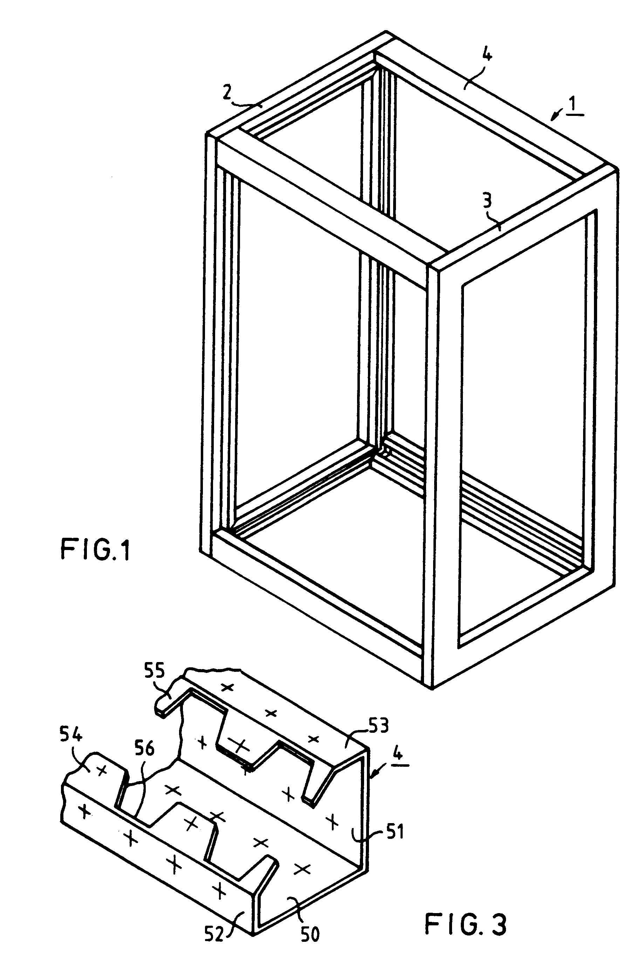

Das in der Figur 1 gezeigte Gerüst 1 ist als tragender Teil eines Schaltschrankes vorgesehen und besteht aus Seitenrahmen 2 und 3 sowie Querholmen 4. Wie bereits die schematische Darstellung erkennen läßt, weisen die Seitenrahmen 2 und 3 Profilelemente eines ersten Typs mit etwa rechteckiger Querschnittsform auf, während die Querholme 4 einem zweiten Typ von Profilelementen angehören, der eine etwa quadratische und einseitig abgeschrägte Querschnittsform besitzt. Das Gerüst 1 ist somit aus den beiden Seitenrahmen 2 und 3 sowie insgesamt vier Querholmen 4 zusammengesetzt. Die Verbindung der Teile kann dabei sowohl in bekannter Weise lösbar oder durch Schweißen unlösbar ausgebildet sein. In beiden Fällen trägt zur Stabilität des Gerüstes 1 bei, daß infolge der größeren Kantenlänge der Querholme 4 die Berührung entlang einer längeren Linie erfolgt als bei einer Zusammensetzung aus gleichen Profilelementen des für die Seitenrahmen 2 und 3 benutzten Typs.

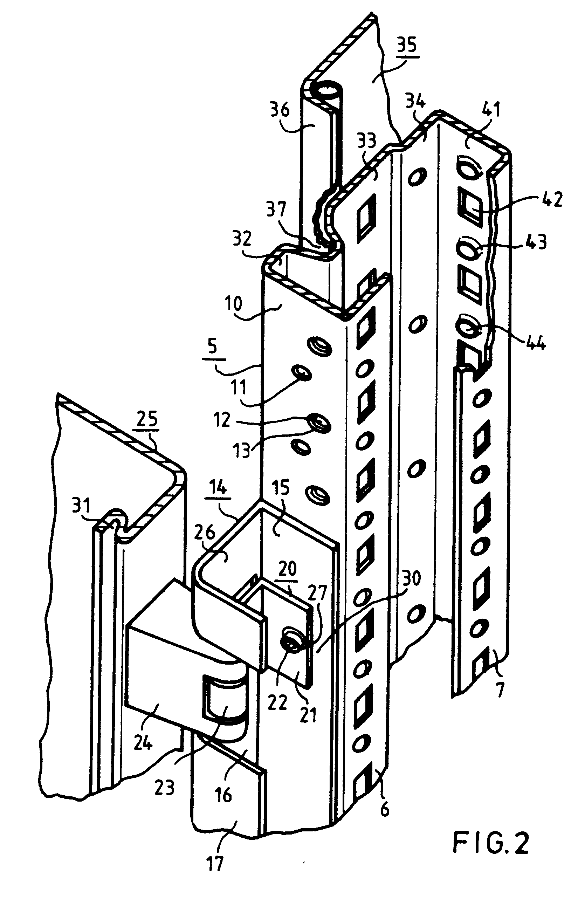

Einen Abschnitt eines für die Seitenrahmen benutzten Profilelementes ist in der Figur 2 zusammen mit weiteren, in der Figur 1 nicht gezeigten Bauteilen dargestellt. Wie man erkennt, weist das Profilelement 5 bei etwa rechteckiger Grundform seines Querschnittes die Gestalt eines offenen Hohlprofils auf, wobei die an die Öffnung des Hohlprofils angrenzenden Schenkel 6 und 7 in einer Ebene liegen. Die Öffnung ist somit dem Innenraum des Schaltschrankes zugewandt. Die Frontseite des Profilelementes 5 wird durch einen ebenen Profilabschnitt 10 gebildet, in dem Löcher 11 und 12 angeordnet sind. Hierbei befinden sich die Löcher 12 in Durchzügen 13. Die Löcher 11 und 12 sind um das halbe Teilungsmaß versetzt angeordnet und befinden sich in zwei seitlich gegeneinander versetzten Reihen. Zur Anbringung einer Tür ist an dem Profilabschnitt 10 des Profilelementes 5 eine Profilschiene 14 von etwa U-förmiger Querschnittsform angebracht, deren dem Profilabschnitt 10 zugewandter Schenkel 15 die Löcher 11 und 12 verdeckt. In einer parallelflankigen Ausnehmung 16 in dem vorderen, dem Schenkel gegenüberliegenden Schenkel 17 der Profilschiene 14 befindet sich ein Scharnierwinkel 20, dessen Fußteil 21 mittels einer Schraube 22 an dem Profilelement 5 befestigt ist. Zugleich wird hierdurch die Profilschiene 14 an dem Profilelement 5 befestigt. Der Scharnierwinkel 20 weist eine Öse 23 für einen Scharnierarm 24 einer Tür 25 auf. Wie gezeigt, läßt sich die Tür 25 bei geeigneter Ausbildung der Ausnehmung 16 der Profilschiene 10 derart, daß sie bis in den Steg 26 der Profilschiene 10 hineinreicht, bis 180° öffnen.

Die Vorderkante 27 des Fußteiles 21 des Scharnierwinkels 20 ist gegenüber der Vorderkante des Schenkels 15 der Profilschiene 14 derart zurückgesetzt, daß ein Randstreifen 30 verbleibt. Dieser dient zur Auflage der Tür 25 mit einer in eine Nut 31 einzulegenden Dichtung.

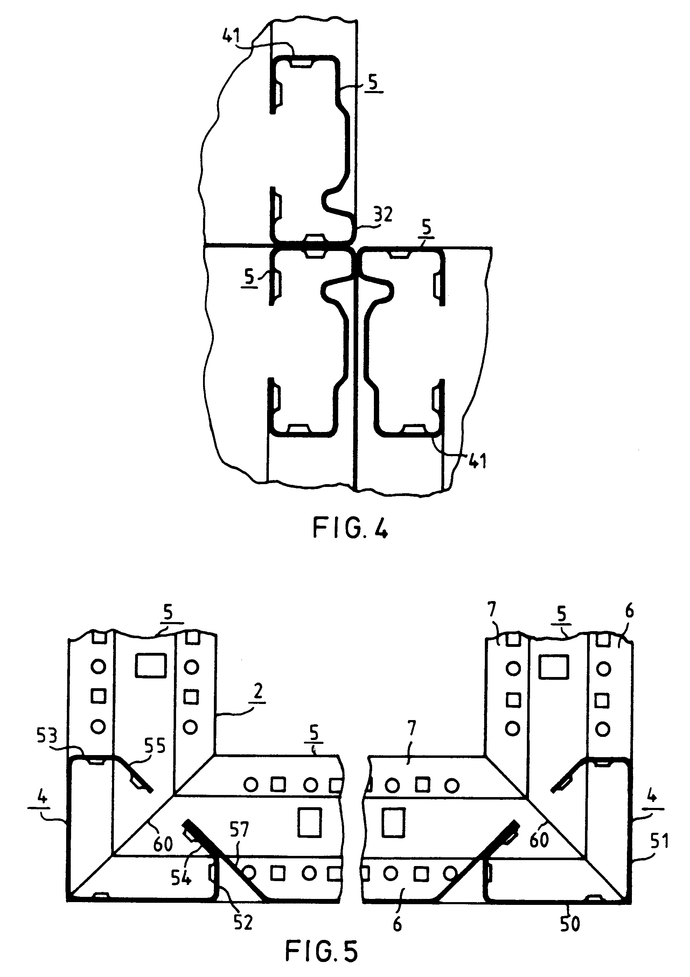

Das Profilelement 5 weist an seiner seitlichen Außenfläche drei gegeneinander versezte ebene Profilabschnitte 32, 33 und 34 auf. Der an die Außenkante anschließende schmale Profilabschnitt 32 dient als Anschlagfläche bei der benachbarten Montage von Schaltschränken, wie dies noch anhand der Figur 4 erläutert wird. Die weiteren Profilabschnitte 33 und 34 sind gegenüber dem Profilabschnitt 32 soweit zurückgesetzt, daß Abdeckungen bzw. Versteifungen angebracht werden können, ohne über den Profilabschnitt 32 überzustehen. Als Beispiel ist in der Figur 2 eine seitliche Abdeckung 35 gezeigt, die mit einer Abwinklung 36 in eine zwischen den Profilabschnitten 32 und 33 angeordnete Einziehung 37 eingreift. Zwischen dem Innenschenkel der Einziehung 37 und der Innenfläche der Abwinklung 36 der Abdeckung 35 befindet sich eine schlauchförmige Dichtung 40.

Der dem vorderen Profilabschnitt 10 gegenüberliegende hintere oder innere Profilabschnitt 41 verläuft parallel zu dem Profilabschnitt 10. Ebenso wie in den Schenkeln 6 und 7 befinden sich auch in dem Profilabschnitt 41 Lochreihen, die aus abwechselnd angeordneten quadratischen Löchern 42 und in Durchzügen 43 befindlichen Löchern 44 gebildet sind. In bekannter Weise lassen sich mit Hilfe solcher Lochreihen auch verhältnismäßig schwere Einbauten zunächst gewichtsentlastend einhängen, um dann die endgültige Befestigung durch das Eindrehen gewindefurchender Schrauben vornehmen zu können.

Der in der Figur 3 gezeigte Abschnitt eines Querholmes 4 weist eine einseitig abgeschrägte quadratische Grundform mit zwei gleich langen Profilabschnitten 50 und 51 auf, deren Länge der Breite der Profilform der Profilelemente 5 (Fig. 2) entspricht. Anschließend folgen kürzere, rechtwinklig zu den Profilabschnitten 50 und 51 stehende Profilabschnitte 52 und 53, deren Länge den Schenkeln 6 und 7 der Profilelemente engepaßt ist. An die Profilabschnitte 50 und 51 schließen sich etwa unter 45° abgewinkelte Schenkel 54 und 55 an, die in gleichmäßiger Teilung mit Ausschnitten 56 versehen sind. Alle Profilabschnitte und Schenkel des Querholmes 4 sind mit Löchern geeigneter Form und Teilung versehen. Hierbei ist die Teilung der Löcher in den Schenkeln 54 und 55 aufgrund der Ausnehmungen 56 doppelt so groß wie in den übrigen Profilabschnitten. Auf diese Weise besteht guter Zugang zu den Löchern in den Profilabschnitten 52 und 53.

Bei der Herstellung der Seitenrahmen 2 und 3 des in der Figur 1 gezeigten Gerüstes 1 liegen die Profilabschnitte 10 am äußeren Umfang der Seitenrahmen, so daß bei benachbarter Montage weiterer gleicher Schaltschränke stets die Profilabschnitte 10 und die Profilabschnitte 32 miteinander in Berührung gelangen. Dies ist in der Figur 4 dargestellt. Die miteinander fluchtenden Löcher in den Profilabschnitten 10 und in den Profilabschnitten 32 gestatten dabei die einfache Herstellung der benötigten Verbindungen.

Die Form der Querholme 4 erweist sich als vorteilhaft zur Anbringung unterer und/oder oberer Abdeckungen. Diese erhalten vorzugsweise eine der Winkelstellung der Schenkel 54 und 55 angepaßte Randbereiche zur Verbindung mittels der Löcher in den genannten Schenkeln. Der verbleibende Raum in den Querholmen 4 kann z. B. zur Verlegung von Leitungen ausgenutzt werden. Diese Anordnung ist in der Figur 5 dargestellt, in der eine untere Abdeckung mit 57 und deren abgewinkelte Ränder mit 58 bezeichnet sind. Ferner ist erkennbar, daß die Querholme 4 mit ihren Profilabschnitten 50 und 51 sowie 52 und 53 auf ganzer Länge mit den Schenkeln 6 der Profilelemente 5 in Verbindung stehen. Dadurch, daß die Profilelemente 5 in den Ecken der Seitenrahmen 2 und 3 mit einer Gehrung von 45° verbunden sind, überbrücken die Querholme die Nahtstelle 60 und entlasten diese von einem Teil der Beanspruchungen.

Wie bereits erwähnt, sind zur Verbindung der Seitenrahmen und der Querholme unterschiedliche Arten von Verbindungen geeignet, bei denen sich die relativ große Stützweite günstig auf die Beanspruchung der Verbindungsstelle und die Auswahl aus den verfügbaren Verfahren auswirkt. Als unlösbare Verbindung kommt dabei neben den verschiedenen bekannten Schweißverfahren auch das Kleben, insbesondere unter Verwendung warmhärtender Zweikomponentenkleber, in Betracht.

## Patentansprüche

1. Gerüst (1) für einen Schaltschrank aus mehrfach abgewinkelten Profilelementen(4,5) mit einseitig offenem Hohlprofil und Lochreihen zur Anbringung von Abdeckungen, Türen und Einbauten **gekennzeichnet durch** folgende Merkmale:
a) das Gerüst (1) ist aus einem ersten Typ eines Profilelementes (5) zur Bildung von Seitenrahmen (2, 3) und einem zweiten Typ eines Profilelementes zur Bildung von die Seitenrahmen (2, 3) verbindenden Querholmen (4) gebildet;
b) die Profilelemente (5) des ersten Typs weisen bei rechteckiger Grundform und seitlicher Lage der längeren Seite der Profilform außen wenigstens zwei ebene Profilabschnitte (32, 33) auf, die voneinander durch eine Einziehung (37) getrennt sind und von denen der zweite, von der Außenkante entferntere Profilabschnitt (33) gegenüber dem ersten, an die Außenkante anschließenden Profilabschnitt (32) zurückstehend angeordnet ist;
c) die Öffnung der Profilform der Profilelemente des ersten Typs befindet sich an der inneren längeren Seite der Profilform und ist von zwei in derselben Ebene liegenden Schenkeln (6, 7) begrenzt;
d) die Profilelemente (4) des zweiten Typs weisen bei einer etwa quadratischen und einseitig abgeschrägten Grundform des Profils zwei rechtwinklig zueinander stehende gleichlange Profilabschnitt (50, 51) mit einer der längeren Seite der rechteckigen Profilform der Profilelemente (5) des ersten Typs entsprechenden Abmessung sowie zwei hieran anschließende, gleichfalls rechtwinklig abgewinkelte kürzere Profilabschnitte (52, 53) und weitere, unter etwa 45° abgewinkelte, die Öffnung der Profilform begrenzende Schenkel (53, 54) auf.

2. Gerüst nach Anspruch 1,
**dadurch gekennzeichnet,** daß an der äußeren längeren Seite der Profilform der Profilelemente (5) des ersten Typs anschließend an den zurückgesetzt angeordneten zweiten Profilabschnitt (33) ein weiterer, durch eine Abkröpfung nochmals zurückgesetzter Profilabschnitt (34) gebildet ist, der sich in einer parallel zu den Ebenen der an derselben Seite der Profilform befindlichen Profilabschnitte (32, 33) verlaufenden Ebene erstreckt.

3. Gerüst nach Anspruch 1,
**dadurch gekennzeichnet,** daß die rechtwinklig abgewinkelten kürzeren Profilabschnitte (52, 53) der Profilelemente (4) des zweiten Typs ebenso breit wie der außenliegende Schenkel (6) der Profilelemente des ersten Typs (5) bemessen ist.

4. Gerüst nach einem der vorangehenden Ansprüche,
**dadurch gekennzeichnet,** daß die in den Profilabschnitten (10, 32, 33, 34, 41; 50, 51; 52, 53) bzw. Schenkeln (6, 7; 53, 54) befindlichen Lochreihen vollständig oder teilweise aus zum Innenraum des Profils gerichteten Durchzügen (43) mit Löchern (44) gebildet sind.

5. Gerüst nach einem der vorangehenden Ansprüche,
**dadurch gekennzeichnet,** daß abwechselnd mit Durchzügen (43) versehene, zum Eindrehen gewindefurchender Schrauben dienende Löcher (44) und Rechtecklöcher (42) ohne Durchzug angeordnet sind.

6. Gerüst nach einem der vorangehenden Ansprüche,
**dadurch gekennzeichnet,** daß der am Umfang der Seitenrahmen (2, 3) liegende Profilabschnitt (10) der Profilelemente (5) des ersten Typs zwei um die halbe Teilung verschobene und seitlich gegeneinander versetzte Reihen von Löchern (11, 12) aufweist.

7. Gerüst nach einem der vorangehenden Ansprüche,
**dadurch gekennzeichnet,** daß die Profilelemente (4) des zweiten Typs in den die Öffnung der Profilform begrenzenden Schenkeln (54, 55) Lochreihen mit einem gegenüber den weiteren Lochreihen doppelten Teilungsmaß aufweisen und daß im Zwischenraum zwischen den Löchern Ausnehmungen (56) angebracht sind.

## Claims

1. Framework (1) for a switch cabinet comprising profiled elements (4, 5), which are bent several times, having a hollow profile open on the one side and series of holes for the attachment of covers, doors and built-in components, characterised by the following features:
a) the framework (1) is formed from a first type of profiled element (5) for the purpose of forming side frames (2, 3), and from a second type of profiled element for the purpose of forming cross-members (4) connecting the side frames (2, 3);
b) when the basic form is rectangular and the longer side of the profiled form is in a lateral position, the profiled elements (5) of the first type have on the outside at least two planar profiled sections (32, 33) which are separated from each other by means of a channel (37) and of which the second profiled section (33), which is comparatively remote from the outer edge, is arranged so as to stand back relative to the first profiled section (32) which links with the outer edge;
c) the opening of the profiled form of the profiled elements of the first type is located on the inner longer side of the profiled form and is defined by two sides (6, 7) which lie in the same plane;
d) when the basic form of the profile is substantially square and bevelled on the one side, the profiled elements (4) of the second type have two profiled sections (50, 51) which are of equal length and stand perpendicular to each other having a dimension which corresponds to the longer side of the rectangular profiled form of the profiled elements (5) of the first type, and also two shorter profiled sections (52, 53) which are connected thereto and are likewise bent perpendicularly, and further sides (53, 54) which are bent at approximately 45° and define the opening of the profiled form.

2. Framework according to claim 1, characterised in that on the outer longer side of the profiled form of the profiled elements (5) of the first type, connected to the second profiled section (33) which is arranged so as to be set back, there is formed a further profiled section (34) which is set back again by an off-set and which extends in a plane running parallel to the planes of the profiled sections (32, 33) which are located on the same side of the profiled form.

3. Framework according to claim 1, characterised in that the shorter profiled sections (52, 53) of the profiled elements (4) of the second type which are bent perpendicularly are dimensioned to have the same width as the externally positioned side (6) of the profiled elements of the first type (5).

4. Framework according to one of the preceding claims, characterised in that the series of holes which are located in the profiled sections (10, 32, 33, 34 41; 50, 51; 52, 53) and sides (6, 7; 53, 54) respectively are formed completely or in part from bent-over edges (43) defining holes (44) directed towards the interior space of the profile.

5. Framework according to one of the preceding claims, characterised in that arranged alternately there are holes (44), which are provided with bent-over edges (43) and which are used to turn in screws with threaded grooves, and rectangular holes (42) without bent-over edge.

6. Framework according to one of the preceding claims, characterised in that the profiled section (10) of the profiled elements (5) of the first type, which section lies on the periphery of the side frames (2, 3), has two series of holes (11, 12) which are offset by half the spacing and staggered laterally relative to each other.

7. Framework according to one of the preceding claims, characterised in that the profiled elements (4) of the second type have series of holes in the sides (54, 55) defining the opening of the profiled form, with a double spacing compared with the further series of holes, and in that recesses (56) are provided in the interspace between the holes.

## Revendications

1. Charpente (1) pour une armoire de commande, constituée par des éléments profilés (4,5) coudés plusieurs fois, comportant un profilé creux ouvert unilatéralement et des séries de trous pour le montage de capots, de portes et d'inserts, caractérisée par les caractéristiques suivantes :
a) la charpente (1) est formée par un premier type d'un élément profilé (5) servant à former des cadres latéraux (2,3) et par un second type d'un élément profilé servant à former des traverses (4) reliant les cadres latéraux (2,3):
b) les éléments profilés (5) du premier type possèdent, à l'extérieur, dans le cas d'une forme de base rectangulaire et d'une position latérale des côtés longitudinaux de la forme profilée, au moins deux sections profilées planes (32,33), qui sont séparées l'une de l'autre par un renfoncement (37), la seconde section profilée (33), qui est la plus éloignée du bord extérieur, étant disposée en retrait par rapport à la première section profilée (32) qui se raccorde à l'arête extérieure:
c) l'ouverture de la forme profilée des éléments profilés du premier type est située sur le côté intérieur le plus long de la forme profilée et est limitée par deux branches (6,7) situées dans le même plan;
d) les éléments profilés (4) du second type possèdent, dans le cas d'une forme de base du profilé approximativement carrée et biseautée unilatéralement, deux sections profilées (50,51) de même longueur, qui sont perpendiculaires entre elles et qui ont une dimension qui correspond au côté le plus grand de la forme profilée rectangulaire des éléments profilés (5) du premier type, ainsi que deux sections profilées plus courtes (52,53), qui se' raccordent à ladite section profilée et sont également coudées à angle droit, et d'autres branches (53,54) qui sont coudées approximativement à 45° et qui délimitent l'ouverture de la forme profilée.

2. Charpente suivant la revendication 1, caractérisée par le fait que sur le côté extérieur le plus long de la forme profilée des éléments profilés (5) du premier type et à la suite de la seconde section profilée (33) disposée en retrait est formée une autre section profilée (34) qui est à nouveau disposée en retrait en raison de la présence d'une zone coudée et qui s'étend dans un plan parallèle aux plans des sections profilées (32, 33), qui sont situées sur le même côté de la forme profilée.

3. Charpente suivant la revendication 1, caractérisée par le fait que les sections profilées les plus courtes (52,53), coudées à angle droit, des éléments profilés (4) du second type ont la même largeur que la branche extérieure (6) des éléments profilés du premier type (5).

4. Charpente suivant l'une des revendications précédentes, caractérisée par le fait que les séries de trous, qui sont situés dans les sections profilées (10, 32, 33, 34, 41: 50, 51: 52, 53) ou dans les branches (6, 7: 53, 54), sont formées en totalité ou en partie par des crevées (43) dirigées vers l'espace intérieur du profilé et comportant des trous (44).

5. Charpente suivant l'une des revendications précédentes, caractérisée par le fait qu'il prévu, selon une disposition alternée, des trous (44) munis de crevées (43) et utilisés pour le vissage de vis autotaraudeuses, et des trous rectangulaires (42) ne comportant pas de crevée.

6. Charpente suivant l'une des revendications précédentes, caractérisée par le fait que la section profilée (10), qui est située sur le pourtour des cadres latéraux (2,3), des éléments profilés (5) du premier type possède deux rangées de trous (11,12), qui sont décalées de la moitié du pas et qui sont également décalées latéralement l'une par rapport à l'autre.

7. Charpente suivant l'une des revendications précédentes, caractérisée par le fait que les éléments profilés (4) du second type possèdent, dans les branches (54,55) délimitant l'ouverture de la forme profilée, des séries de trous ayant un pas égal au double de celui des autres rangées de trous et que des découpes (56) sont ménagées dans l'intervalle présent entre les trous.
